# EUROPÄISCHE PATENTSCHRIFT

(11) **EP 0 853 057 B1**
(45) Veröffentlichungstag und Bekanntmachung des Hinweises auf die Patenterteilung: **05.06.2002**
(21) Anmeldenummer: 98100206.6
(22) Anmeldetag: 08.01.1998
(51) Int. Cl.: B65G 47/82

(54) **Vorrichtung zum Befördern eines von einer Transportvorrichtung in einer Transportrichtung bewegten Gegenstandes quer zur Transportrichtung**
Device for transferring an object, conveyed by a conveyor in a given direction, transversally to that direction
Dispositif pour transférer un objet, transporté par un convoyeur dans une direction donnée, transversalement à cette direction

(30) Priorität: 11.01.1997 DE 19700786
(43) Veröffentlichungstag der Anmeldung: 15.07.1998
(73) Patentinhaber: AMI Förder- und Lagertechnik GmbH, 57642 Alpenrod (DE)
(72) Erfinder: Schmidt, Jonny R., 57520 Neunkhausen (DE); Oel, Ralf, 57627 Hachenburg (DE); Bald, Wolfgang, 57258 Freudenberg (DE); Schulte, Michael, 572374 Wilnsdorf (DE); Fritsch, Roland, 57234 Wilnsdorf (DE)
(74) Vertreter: Hilleringmann, Jochen, Dipl.-Ing.

(56) Entgegenhaltungen:
- EP-A- 0 182 938

## Beschreibung

Die Erfindung betrifft eine Vorrichtung zum Befördern eines von einer Transportvorrichtung in einer Transportrichtung bewegten Gegenstandes quer zur Transportrichtung.

Bei der Warenkommissionierung oder bei der Beförderung von Gegenständen längs diverser unterschiedlicher Transportwege ist stets der Fall anzutreffen, daß ein Gegenstand von einer ersten Transportvorrichtung auf eine zweite Transportvorrichtung übergeben werden muß. Dabei kann sich die zweite Transportvorrichtung parallel oder in einem Winkel von insbesondere 90° zur ersten Transportvorrichtung erstrecken. Da die Gegenstände mitunter in dichter Aufeinanderfolge transportiert werden, muß eine solche Übergabevorrichtung recht schnell arbeiten, um z. B. die Vorschaltung einer Vereinzelungsvorrichtung zu vermeiden.

Im einfachsten Fall könnte man als Übergabevorrichtung einen Schieber einsetzen, der quer zur ersten Transportvorrichtung verfahrbar ist und den Gegenstand seitlich über die Transportvorrichtung bewegt. Als Übergabevorrichtung werden im Stand der Technik auch sogenannte Kettenquerausschleuser eingesetzt, die in die den zu überführenden Gegenstand transportierende Transportvorrichtung integriert werden. Diese Kettenquerausschleuser erfordern also eine Unterbrechung und Manipulation der Transportvorrichtung, weshalb diese z. B. kein umlaufendes Transportband aufweisen kann, was sie im Hinblick auf die Transportvorrichtung in ihrer Konstruktion aufwendig werden läßt.

Aus DE 295 10 037 U1 ist eine auch als Drehausschleuser bekannte Übergabevorrichtung bekannt. Dieser Drehausschleuser ist mit einem Dreharm versehen, der um eine vertikale Achse dreht und sich dabei über der Transportvorrichtung bewegt. An den beiden Enden des um eine mittig angeordnete Drehachse drehbaren Dreharms sind Einwirkungsorgane angeordnet, die um zur Antriebswelle des Dreharms parallele Drehachsen drehbar gelagert sind. Bei Rotation des Dreharms behalten die Einwirkorgane ihre zur Erstreckung der Transportvorrichtung parallele Ausrichtung bei und wirken seitlich auf die von der Transportvorrichtung transportierten Gegenstände ein, um diese quer zur Transportrichtung der Transportvorrichtung zu bewegen. Der Abstand zwischen der Drehachse des Dreharms und dem Einwirkungsorgan bestimmt das Maß, um das ein Gegenstand quer zur Transportvorrichtung bewegt werden kann. Je größer dieses Bewegungsmaß ist, desto länger muss der Dreharm ausgeführt sein. Um auch mit hoher Aufeinanderfolge transportierte Gegenstände mittels eines Drehausschleusers von einer Transportvorrichtung auf eine andere - übergeben zu können, muss die Rotationsgeschwindigkeit des Dreharms entsprechend hoch sein. Da der Dreharm nicht fortlaufend rotiert, sind also zur Erzielung hoher Rotationsgeschwindigkeiten große Beschleunigungen und Verzögerungen erforderlich, was wiederum recht starke Antriebsvorrichtungen voraussetzt, um die Trägheitsmomente des Dreharms zu überwinden. Entsprechend stabil müssen die einzelnen Komponenten des Drehausschleusers ausgeführt sein.

Der Erfindung liegt die Aufgabe zugrunde, eine Vorrichtung zum Bewegen eines von einer Transportvorrichtung in einer Transportrichtung transportierten Gegenstandes quer zur Transportrichtung zu schaffen, mit der sich hohe Bewegungsraten erzielen lassen, ohne dass die Konstruktion der Vorrichtung übermäßig stabil ausgeführt sein muss.

Zur Lösung dieser Aufgabe wird mit der Erfindung eine Vorrichtung gemäß Anspruch 1 vorgeschlagen; die Unteransprüche beziehen sich auf weitere Ausgestaltungen der Erfindung.

Die erfindungsgemäße Beförderungs- bzw. Übergabevorrichtung ist mit mindestens einer Einwirkungseinheit versehen, die drehbar am Dreharm angeordnet ist und zum Befördern des Gegenstandes quer zur Transportrichtung auf den Gegenstand einwirkt. Im Regelfall weist der Dreharm zwei derartige Einwirkungseinheiten auf, die an den beiden Enden des Dreharms angeordnet sind. Der Dreharm selbst ist in etwa in der Mitte zwischen den beiden Einwirkungseinheiten mit der Antriebswelle der Antriebsvorrichtung verbunden.

Jede Einwirkungseinheit der erfindungsgemäßen Vorrichtung weist eine Lagerungsvorrichtung für das Einwirkungsorgan der Einwirkungseinheit auf. An der Lagerungsvorrichtung ist das Einwirkungsorgan linear verschiebbar gelagert, wobei sich das Einwirkungsorgan gesteuert entlang eines linearen Verschiebungsweges zwischen einer Ausrück- und einer Rückzugsposition vor- und zurückbewegen läßt. In der Ausrückposition weist das Einwirkungsorgan seinen größten Abstand zur Lagerungsvorrichtung auf, wohingegen das Einwirkungsorgan in seiner Rückzugsposition bis dicht an die Lagerungsvorrichtung zurückbewegt ist. Die Lagerungsvorrichtung selbst ist drehbar an einer Drehachse gelagert, die mit dem Dreharm verbunden ist und eine zur Antriebswelle des Dreharms parallele Ausrichtung aufweist. Zur Drehung der Lagerungsvorrichtung bei gleichzeitiger linearer Bewegung des an der Lagerungsvorrichtung gelagerten Einwirkungsorgans dient eine Antriebsvorrichtung, die mit der den Dreharm antreibenden Antriebsvorrichtung gekoppelt oder getrennt von dieser Antriebsvorrichtung ausgebildet sein kann. Die Antriebsvorrichtung der Einwirkungseinheit dreht die Lagerungsvorrichtung bzw. verschiebt das Einwirkungsorgan derart synchron zur Rotation des Dreharms, daß pro Umdrehung des Dreharms die Lagerungsvorrichtung eine Umdrehung um ihre Drehachse vollführt und sich das Einwirkungsorgan in beiden Bewegungsrichtungen linear jeweils einmal entlang des Verschiebungsweges zwischen seiner Rückzugsposition und seiner Ausrückposition bewegt. Pro Umdrehung des Dreharms vollführt das Einwirkungsorgan also eine Vor- und eine Zurückbewegung, so daß das Einwirkungsorgan den Verschiebungsweg insgesamt zweimal (pro Bewegungsrichtung einmal) durchfährt.

Durch die erfindungsgemäße synchrone Drehbewegung von Dreharm und Lagerungsvorrichtung der mindestens einen Einwirkungseinheit wird erreicht, daß die Ausrichtung der Lagerungsvorrichtung relativ zur Transportvorrichtung stets gleich bleibt. Das Einwirkungsorgan läßt sich relativ zur Lagerungsvorrichtung in einer quer zur Transportrichtung der von der Transportvorrichtung bewegten Gegenstände verlaufenden Richtung vor- und zurückbewegen. Damit bleibt auch die Ausrichtung des Einwirkungsorgans relativ zur Transportvorrichtung pro Rotation des Dreharms gleich. Ferner vollführt also auch das Einwirkungsorgan pro Rotation des Dreharms eine Umdrehung um die Drehachse der Lagerungsvorrichtung. Dieser Drehbewegung des Einwirkungsorgans (bezogen auf den Dreharm) wird eine Linearbewegung des Einwirkungsorgans überlagert. Diese überlagerte Linearbewegung ist vorzugsweise sinusförmig, wobei das Einwirkungsorgan seine Ausrückposition einnimmt, wenn der Dreharm quer zur Transportrichtung verläuft und sich der Dreharmabschnitt zwischen der Drehachse des Dreharms und der Drehachse der Lagerungsvorrichtung.oberhalb der Transportvorrichtung erstreckt. Bei Verwendung zweier Einwirkungseinheiten an den beiden Enden des Dreharms mit mittig dazwischen angeordneter Dreharm-Antriebswelle sind die Bewegungen der beiden Einwirkungsorgane um 180° gegeneinander phasenverschoben. Mit anderen Worten befindet sich das bei der obigen Drehstellung des Dreharms außerhalb der Transportvorrichtung angeordnete andere Einwirkungsorgan in seiner Rückzugsposition.

Durch das erfindungsgemäße Ausrücken des Einwirkungsorgans jeder Einwirkungseinheit ist es möglich, die Länge des Dreharms zu reduzieren, ohne daß dies mit einer Verkürzung des Bewegungsmaßes verbunden ist, um das die von der Transportvorrichtung bewegten Gegenstände quer zur Transportrichtung befördert werden können. Eine Verkürzung des Dreharms wirkt sich insofern vorteilhaft aus, als sich das Trägheitsmoment des Dreharms verringert, wodurch der Dreharm bei höheren Rotationsgeschwindigkeiten und insbesondere bei höheren Beschleunigungen bzw. Verzögerungen betrieben werden kann.

In vorteilhafter Weiterbildung der Erfindung ist vorgesehen, daß die Antriebsvorrichtung jeder Einwirkungseinheit zwei gegensinnig antreibbare Drehachsen aufweist, die jeweils zur Antriebswelle des Dreharms parallel ausgerichtet sind. Die erste Drehachse ist dabei mit der Lagerungsvorrichtung gekoppelt, während die zweite Drehachse über insbesondere ein Drehkurbelgetriebe mit dem Einwirkungsorgan der betreffenden Einwirkungseinheit gekoppelt ist. Die erste Drehachse ist drehend angetrieben und mit der Lagerungsvorrichtung (fest) verbunden. Die zweite Drehachse ist fest mit dem Dreharm verbunden, wobei zwischen der zweiten Drehachse und dem Einwirkungsorgan das Drehkurbelgetriebe angeordnet ist. Aufgrund der Drehung der Lagerungsvorrichtung relativ zum Dreharm und der starren Kopplung der zweiten Drehachse mit dem Dreharm kommt es zu einer Relativdrehung von Lagerungsvorrichtung und zweiter Drehachse, die zum Antreiben des Drehkurbelgetriebes zwecks linearer Vor- und Zurückbewegung des Einwirkungsorgans ausgenutzt werden kann.

Vorzugsweise ist die erste Drehachse über ein Getriebe mit der Antriebswelle des Dreharms gekoppelt. Die erste Drehachse ist drehbar am Dreharm gelagert. Bei dem diese Drehachse mit der Antriebswelle koppelnden Getriebe handelt es sich insbesondere um ein Umschlingungsgetriebe, d. h. um einen Riemen-, Ketten- o. dgl. Umschlingungselementtrieb.

Als Alternative kommen Zahnradgetriebe o. dgl. in Frage, die die Drehbewegung der Antriebswelle auf eine Drehbewegung der Drehachse übertragen.

Das bereits oben erwähnte Drehkurbelgetriebe weist vorzugsweise einen radial von der zweiten Drehachse abstehenden ersten Hebel auf, der gelenkig mit einem zweiten Hebel verbunden ist, der wiederum gelenkig mit dem Einwirkungsorgan verbunden ist.

Alternativ zu einem Drehkurbelgetriebe kann zwecks bidirektionaler Linearbewegung des Einwirkungsorgans auch jedes andere Getriebe eingesetzt werden, das eine Drehbewegung am Eingang in eine bidirektionale Linearbewegung am Ausgang umsetzt. Als Beispiel für ein derartiges Getriebe sei z. B. eine Kulissenführung oder eine Nockenfolgersteuerung des Einwirkungsorgans genannt.

Eine platzsparende Anordnung der Drehachsen der Einwirkungseinheit ist vorzugsweise dadurch zu realisieren, daß die erste Drehachse eine Hohlachse ist, in der koaxial die zweite Drehachse angeordnet ist.

In vorteilhafter Weiterbildung der Erfindung ist vorgesehen, daß die Antriebsvorrichtung des Dreharms und die Antriebsvorrichtung jeder Einwirkungseinheit den Dreharm und jedes Einwirkungsorgan derart phasenverschoben antreiben, daß sich jedes Einwirkungsorgan etwa in der Mitte seines Verschiebungsweges zwischen der Rückzugs- und der Ausrückposition befindet, wenn der Dreharm parallel zur Transportrichtung der von der Transportvorrichtung bewegten Gegenstände ausgerichtet ist.

Nachfolgend wird anhand der Figuren ein Ausführungsbeispiel der Erfindung näher erläutert. Im einzelnen zeigen:
- Fig. 1: eine Draufsicht auf einen Abschnitt einer Transportvorrichtung für Gegenstände mit einer zu einer Seite der Transportvorrichtung angeordneten Vorrichtung zum Befördern der Gegenstände quer zur Transportvorrichtung,
- Fig. 2: eine Schnittansicht entlang der Linie II-II der Fig. 1,
- Fig. 3: eine Draufsicht ähnlich der gemäß Fig. 1, wobei jedoch der Dreharm quer zur Transportvorrichtung verläuft und die Linie, entlang derer sich die Einwirkungsorgane pro Umdrehung des Dreharms bewegen, strichpunktiert angedeutet ist,
- Fig. 4: eine Seitenansicht auf den Dreharm mit Antrieb gemäß dem Pfeil IV der Fig. 1 und
- Fig. 5: einen Schnitt durch ein Ende des Dreharms mit an diesem gelagerter Einwirkungseinheit gemäß der Linie V-V der Fig. 1 in vergrößertem Maßstab.

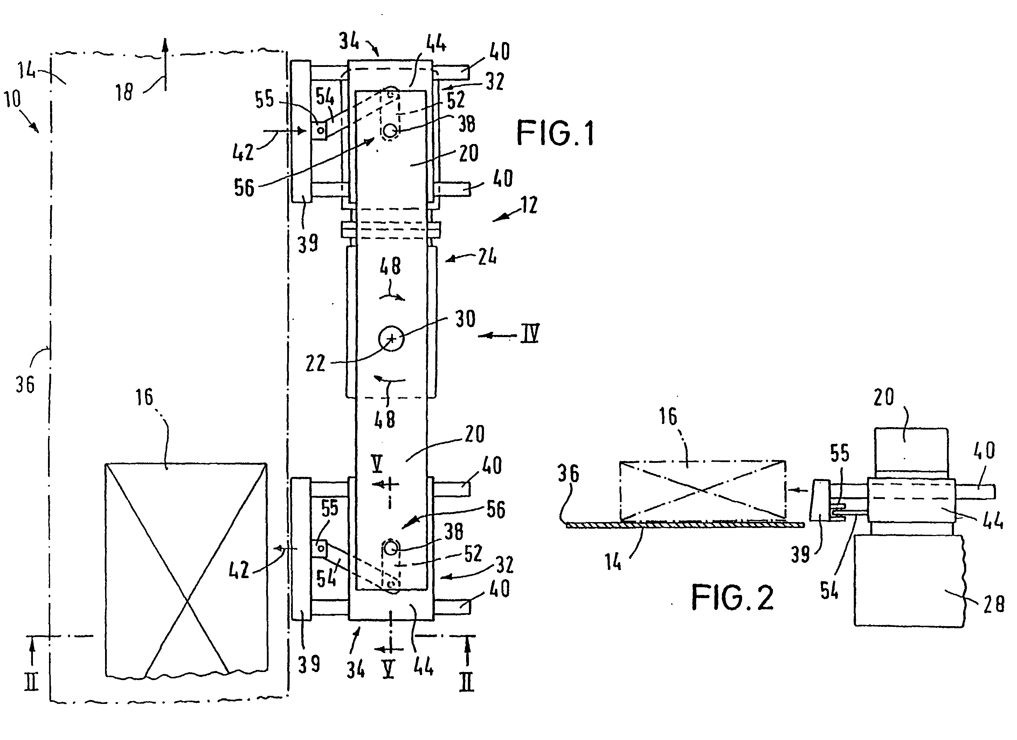

Fig. 1 zeigt eine Draufsicht auf eine Transportvorrichtung 10 und eine neben der Transportvorrichtung 10 angeordnete Vorrichtung 12, mittels derer von der Transportvorrichtung 10 transportierte Gegenstände quer zur Transportrichtung verschoben werden können. Die Transportvorrichtung 10 weist ein Transportband 14 auf, auf dessen Obertrum (in Fig. 1 zu sehen) Gegenstände 16 hintereinander in Transportrichtung (siehe Pfeil 18) bewegt werden. Neben dem Transportband 14 ist die Vorrichtung 12 angeordnet, die einen Dreharm 20 aufweist, der um eine vertikale Achse 22 drehbar ist. Die Vorrichtung 12 ist mit einem Antriebsaggregat 24 ausgestattet, das einen Motor 26 und ein Getriebe 28 aufweist, dessen Antriebswelle 30 starr mit dem Dreharm 20 verbunden ist. Der Dreharm 20 erstreckt sich symmetrisch zu beiden Seiten der Antriebswelle 30 und trägt an seinen einander abgewandten Enden 32 Einwirkungseinheiten 34, die bei Rotation des Dreharms 20 auf einen auf dem Transportband 14 transportierten Gegenstand 16 seitlich einwirken, um den Gegenstand 16 über den dem Dreharm 20 abgewandten Längsrand 36 des Transportbandes 14 hinaus.

Jede Einwirkungseinheit 34 dreht sich synchron zur Rotation des Dreharms 20 um Drehachsen 38, die an den Enden 34 des Dreharms 20 angeordnet sind. Pro Umdrehung des Dreharms 20 drehen sich beide Einwirkungseinheiten 34 jeweils einmal um die Drehachsen 38. Dabei bleibt die Ausrichtung der Einwirkungseinheiten 34 relativ zum Transportband 14 gleich.

Jede Einwirkungseinheit 34 ist mit einem quer zur Transportrichtung 18 des Transportbandes 14 vor- und zurückbewegbaren Einwirkungsorgan 39 versehen, das als Platte ausgebildet ist. Jedes Einwirkungsorgan 39 ist von zwei Führungsstangen 40 gehalten, die sich in Bewegungsrichtung (siehe Pfeil 42 der Fig. 1) des Einwirkungsorgans 39 erstrecken. Die Führungsstangen 40 sind gleitend verschiebbar in Lagerböcken 44 geführt, die ihrerseits drehbar an den Drehachsen 38 angebracht sind.

Die Lagerblöcke 44 drehen sich synchron mit der Rotation des Dreharms 20 um die Drehachsen 38. Da die Lagerblöcke 44 dabei ihre Ausrichtung relativ zum Transportband 14 nicht verändern, bleiben also auch die Ausrichtungen der Einwirkungsorgane 39, die zwischen den Lagerblöcken 44 und dem Transportband 14 angeordnet sind (bezogen auf die Drehstellung des Dreharms 20 gemäß Fig. 1) unverändert. Die plattenförmigen Einwirkungsorgane 39 bleiben also parallel zur Transportrichtung 18 des Transportbandes 14 ausgerichtet, wenn sich der Dreharm 20 dreht.

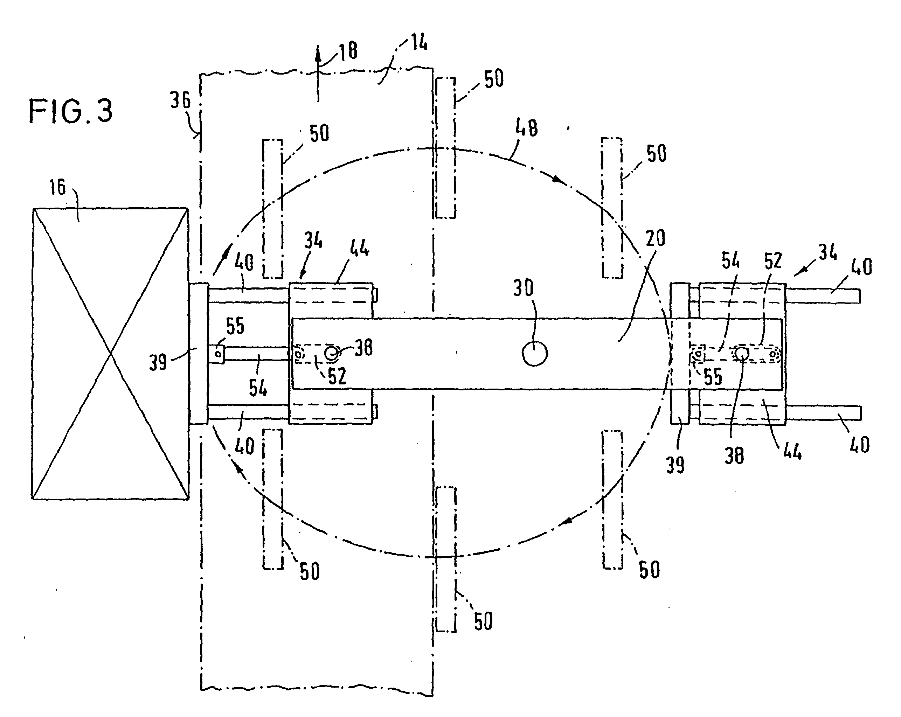

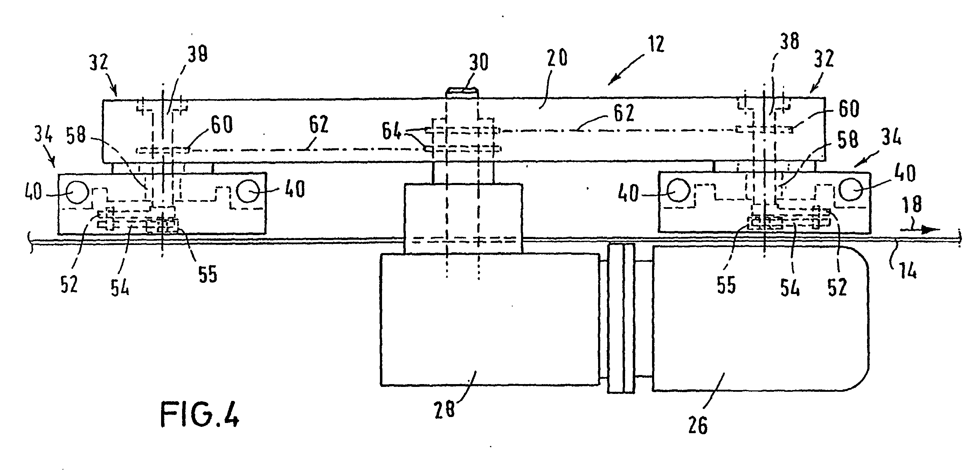

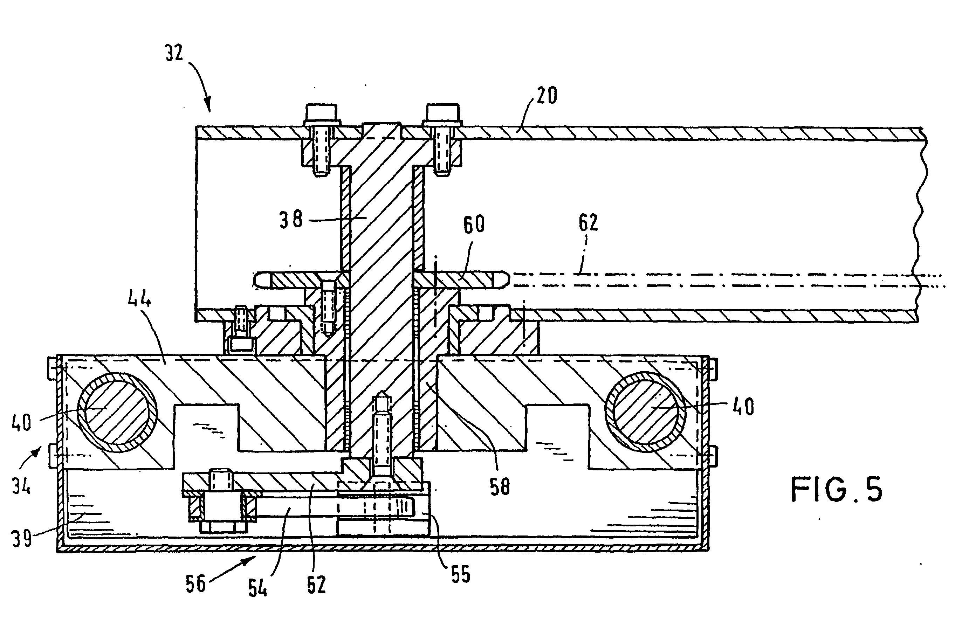

Der Drehbewegung der plattenförmigen Einwirkungsorgane 39 um die Drehachsen 38 ist eine lineare Vor- und Zurückbewegung in Richtung der Pfeile 42 überlagert. Diese Bewegungsüberlagerung erfolgt vermittels eines Drehkurbelgetriebes, das in jeder Einwirkungseinheit 34 angeordnet ist und auf dessen Aufbau anhand der Fign. 4 und 5 näher eingegangen werden wird. Durch die lineare Verschiebung der Einwirkungsorgane 39 lassen sich diese zwischen einer Rückzugsposition und einer Ausrückposition verschieben. Fig. 3 zeigt diese Verschiebung der plattenförmigen Einwirkungselemente 39. Gemäß Fig. 3, in der der Dreharm 20 bezogen auf die Darstellung nach Fig. 1 um 90° im Drehsinn (s. Pfeile 46) dargestellt ist, ist das Einwirkungsorgan 39 der oberhalb des Transportbandes 14 angeordneten Einwirkungseinheit 34 (in der Darstellung gemäß Fig. 3 am linken Ende des Dreharms 20) vollständig ausgefahren, während das plattenförmige Einwirkungsorgan 39 der anderen Einwirkungseinheit 34 vollständig zurückgezogen ist. Die Einwirkungsorgane 39 vollführen zwischen ihren Extrempositionen (Ausrückposition und Rückzugsposition) eine sinusförmige Hubbewegung. Hierdurch bewegen sich die Einwirkungsorgane 39 bei Rotation des Dreharms 20 auf einer elliptischen geschlossenen Linie 48. Fig. 3 zeigt auch, daß bei unterschiedlichen Drehpositionen des Dreharms 20 die Ausrichtung der Einwirkungsorgane 39 (durch die strichpunktierten Linien 50 angedeutet) stets gleichbleibend zum Transportband 14 ausgerichtet sind.

Anhand der Fign. 4 und 5 wird nachfolgend der interne Aufbau des Dreharms 20 und seine Verbindung zu den Einwirkungseinheiten 34 näher beschrieben. Der Dreharm 20 ist ein Hohlprofil, an dessen Enden 32 die Drehachsen 38 darstellende Bolzen angeordnet sind, die nach unten in Richtung zum Transportband 14 aus dem Dreharm 20 herausragen. An den freien unteren Enden der die Drehachsen 38 bildenden Bolzen sind jeweils ein radial abstehender Hebel 52 drehfest befestigt, deren den Drehachsen 38 jeweils abgewandten freien Enden gelenkig mit jeweils einem zweiten Hebel 54 verbunden ist, die wiederum an den Einwirkungsorganen 39 angelenkt sind. Die beiden Hebel 52 und 54 bilden ein Drehkurbelgetriebe 56 zum Vor- und Zurückbewegen der Einwirkungsorgane 39.

Um die Drehachsen 38 herum sind als Hohlwellen ausgeführte Drehachsen 58 gelagert, die drehbar um die Drehachsen 38 sind. Beide Drehachsen 58 weisen jeweils ein Zahnrad 60 auf. Beide Zahnräder 60 sind über Ketten 62 mit Zahnrädern 64 gekoppelt, die auf der Antriebswelle 30 des Dreharms 20 angeordnet sind und sich zusammen mit dieser Antriebswelle 30 bewegen. Die koaxial zu den Drehachsen 38 angeordneten Drehachsen 58 ragen ebenfalls nach unten aus dem Dreharm 20 heraus, wo sie drehfest mit den Lagerungsblöcken 44 verbunden sind. An den Lagerungsblöcken 44 sind, wie oben erläutert, die Führungsstangen 40 axial verschiebbar geführt.

Nachfolgend soll noch kurz auf die Funktionsweise und den Bewegungsablauf der einzelnen Komponenten der Vorrichtung 12 eingegangen werden.

Durch Drehung der Antriebswelle 30 werden der Dreharm 20 und die drehfest mit der Antriebswelle 30 verbundenen Zahnräder 64 gedreht. Die Drehung der Zahnräder 64 wird über die Ketten 62 auf die Zahnräder 60 der Drehachsen 58 übertragen. Hierdurch drehen sich die Drehachsen 58 um die als feststehende Bolzen ausgeführten Drehachsen 38. Mit den Drehachsen 58 drehen sich auch die Lagerblöcke 44, so daß es bei gleich großen Zahnrädern 60 und 64 zu synchronen Drehbewegungen des Dreharms 20 einerseits und der Lagerblöcke 44 andererseits kommt.

Infolge der Drehung der Lagerblöcke 44 drehen sich diese um den starr mit der Drehachse 38 verbundenen Hebel 52 des Drehkurbelgetriebes 56. Es kommt also zu einer relativen Drehbewegung von Lagerungsblock 44 und Hebel 52, wodurch sich der mit dem Hebel 52 gelenkig verbundene Hebel 54 bewegt, was wiederum zur Folge hat, daß die Einwirkungsorgane 39 linear vor- und zurückbewegt werden, wie dies bei einem Antrieb durch ein Kurbelgetriebe der Fall ist. Hierdurch wird auf elegante Weise der Drehbewegung der Einwirkungsorgane 39 um die Drehachsen 38 eine sinusförmige Vor- und Zurückbewegung überlagert. Durch entsprechende Ausrichtung des mit der Drehachse 38 fest verbundenen Hebels 52 läßt sich die Position einstellen, die die Einwirkungsorgane 39 bei zur Transportrichtung 18 paralleler Ausrichtung des Dreharms 20 einnehmen. Wie in den Figuren dargestellt, erstrecken sich die Hebel 52 der Kurbelgetriebe 56 in axialer Ausrichtung des Dreharms 20, so daß die Einwirkungsorgane 39 sich in der Position des Dreharms 20 gemäß Fig. 1 in einer Mittelstellung zwischen ihren Ausrück- und Rückzugspositionen befinden. Nach einer 90°-Drehung des Dreharms 20 in Drehrichtung 48 sind die Hebel 52 und 54 der Drehkurbelgetriebe 56 parallel zueinander angeordnet, wobei die Hebel 52 und 54 der einen oberhalb des Transportbandes 14 angeordneten Einwirkungseinheit 34 sich in Verlängerung zueinander erstrecken, während die Hebel 52 und 54 der anderen Einwirkungseinheit 34 einander überlappend angeordnet sind (s. Fig. 3).

Durch die hier beschriebene und in den Figuren gezeigte Konstruktion und Konzeption des Dreharms 20 der Vorrichtung 12 ist es möglich, auch bei vergleichsweise kurzen Dreharmen 20 Gegenstände 16 über eine vergleichsweise große Strecke quer zur Transportrichtung 18 seitlich zu verschieben. Dies ist insbesondere anhand von Fig. 3 zu erkennen; ohne Hubbewegung des in Fig. 3 links dargestellten Einwirkungsorgans 39 wäre der Verschiebungsweg für den Gegenstand 16 quer zur Transportrichtung 18 wesentlich kürzer.

## Patentansprüche

1. Vorrichtung zum Befördem eines von einer Transportvorrichtung in einer Transportrichtung bewegten Gegenstandes quer zur Transportrichtung, mit
- einem Dreharm (20),
- einer Antriebsvorrichtung (24), die eine Antriebswelle (30) zum Antreiben des Dreharms (20) aufweist, und
- mindestens einer am Dreharm (20) angeordneten Einwirkungseinheit (34) zum Enwirken auf den quer zur Transportrichtung (18) zu befördernden Gegenstand (16), wobei die Einwirkungseinheit (34) ein Einwirkungsorgan (39) zur Anlage an dem Gegenstand (16) und eine um eine zur Antriebswelle (30) des Dreharms (20) parallele Drehachse (38) drehbare Lagerungsvorrichtung (44) für das Einwirkungsorgan (39) aufweist,
**dadurch gekennzeichnet,**
- **dass** das Einwirkungsorgan (39) entlang eines linearen Verschiebungsweges (42) zwischen einer Ausrück- und einer Rückzugsposition vor- und zurückverschiebbar an der Lagerungsvorrichtung (44) der Einwirkungseinheit (34) gelagert ist und
- **dass** die Einwirkungseinheit (34) eine Antriebsvorrichtung (56,60,62,64) aufweist, die die Lagerungsvorrichtung (44) und das Einwirkungsorgan (39) derart synchron zur Rotation des Dreharms (20) dreht bzw. vor- und zurückbewegt, dass pro Umdrehung des Dreharms (20) die Lagerungsvorrichtung (44) eine Umdrehung um ihre Drehachse (38) vollführt und sich das Einwirkungsorgan (39) in beiden Bewegungsrichtungen (42) linear jeweils einmal entlang des Verschiebungsweges (42) zwischen seiner Rückzugsposition und seiner Ausrückposition bewegt.

2. Vorrichtung nach Anspruch 1, **dadurch gekennzeichnet, dass** die Antriebsvorrichtung der Einwirkungseinheit (34) zwei gegensinnig antreibbare und zur Antriebswelle (30) des Dreharms (20) parallele Drehachsen (38,58) aufweist, von denen die erste Drehachse (58) mit der Lagerungsvorrichtung (44) und die zweite Drehachse (38) über ein Getriebe (56) mit dem Einwirkungsorgan (39) gekoppelt ist.

3. Vorrichtung nach Anspruch 2, **dadurch gekennzeichnet, dass** das Getriebe (56) ein Drehkurbelgetriebe ist.

4. Vorrichtung nach Anspruch 2 und 3, **dadurch gekennzeichnet, dass** die erste Drehachse (58) über ein Getriebe (62) mit der Antriebswelle (30) des Dreharms (20) gekoppelt ist und dass die zweite Drehachse (38) fest mit dem Dreharm (20) verbunden ist.

5. Vorrichtung nach Anspruch 3 und 4, **dadurch gekennzeichnet, dass** das Drehkurbelgetriebe (56) einen radial von der zweiten Drehachse (38) abstehenden ersten Hebel (52) und einen zweiten Hebel (54) aufweist, der gelenkig mit dem ersten Hebel (52) und dem Einwirkungsorgan (39) verbunden ist.

6. Vorrichtung nach Anspruch 4 oder 5, **dadurch gekennzeichnet, dass** die erste Drehachse (58) eine Hohlachse ist, in der koaxial die zweite Drehachse (38) angeordnet ist.

7. Vorrichtung nach einem der Ansprüche 1 bis 6, **dadurch gekennzeichnet, dass** das Einwirkungsorgan (39) von mindestens einem Gleitprofil (40) getragen ist, das gleitend an der Lagerungsvorrichtung (44) gelagert ist.

8. Vorrichtung nach einem der Ansprüche 1 bis 7, **dadurch gekennzeichnet, dass** die Antriebsvorrichtung (24) des Dreharms (20) und die Antriebsvorrichtung (56,60,62,64) jeder Einwirkungseinheit (34) den Dreharm (20) und jedes Einwirkungsorgan (39) derart phasenverschoben antreiben, dass sich bei zur Transportrichtung (18) des Gegenstandes (16) paralleler Ausrichtung des Dreharms (20) jedes Einwirkungsorgan (39) etwa in der Mitte seines Verschiebungsweges (42) zwischen der Rückzugs- und der Ausrückposition befindet.

9. Vorrichtung nach einem der Ansprüche 1 bis 8, **dadurch gekennzeichnet, dass** an dem Dreharm (20) zwei Bnwirkungseinheiten (34) angeordnet sind und dass die Antriebswelle (30) des Dreharms (20) mit diesem in der Mitte zwischen den beiden Einwirkungseinheiten (34) verbunden ist.

## Claims

1. Device for conveying transverse a transport direction an object transported in said transport direction by a transporting device, comprising:
- a rotary arm (20),
- a drive device (24) with a drive shaft (30) for driving the rotary arm (20), and
- at least one acting unit (34) arranged at the rotary arm (20) for acting on the object (16) to be conveyed transverse to the transport direction (18), the acting unit (34) comprising an acting member (39) for abutting contact with the object (16) and a bearing device (44) for the acting member (39) that is rotatable about an rotary axis (38) extending in parallel with the drive shaft (30) of the rotary arm (20),
**characterized in that**
- the acting member (39) is supported at the bearing device (44) of the acting unit (34) so as to be displaceable back and forth along a linear displacement path (42) between a projected position and a retracted position, and
- the acting unit (34) comprises a drive device (56, 60, 62, 64) that rotates or moves back and forth the bearing device (44) and the acting member (39), respectively, in such synchronism with the rotation of the rotary arm (20) that per one rotation of the rotary arm (20) the bearing device (44) rotates once about its rotary axis (38) and the acting member (39) linearly moves once along the displacement path (42) between its position of withdrawal and its disconnected position in both directions of movement (42).

2. The device of claim 1, **characterized in that** the drive device of the acting unit (34) comprises two rotary axes (38, 58) adapted to be driven in opposite senses and extending in parallel with the drive shaft (30) of the rotary arm (20), the first rotary axis (58) being coupled with the bearing device (44) and the second rotary axis (38) being coupled with the acting member (39) through a transmission (56).

3. The device of claim 2, **characterized in that** the transmission (56) is a rotary crank gear.

4. The device of claims 2 and 3, **characterized in that** the first rotary axis (58) is coupled with the drive shaft (30) of the rotary arm (20) through a transmission (62) and that the second rotary axis (38) is firmly connected with the rotary arm (20).

5. The device of claims 3 and 4, **characterized in that** the rotary crank gear (56) comprises a first lever (52) radially projecting from the second rotary axis (38) and a second lever (54) articulately connected with the first lever (52) and the acting member (39).

6. The device of claims 4 or 5, **characterized in that** the first rotary axis (58) is a hollow axis in which the second rotary axis (38) is arranged coaxially.

7. The device of one of claims 1 to 6, **characterized in that** the acting member (39) is supported by at least one sliding profile (40) that is slidably supported at the bearing device (44).

8. The device of one of claims 1 to 7, **characterized in that** the drive device (24) of the rotary arm (20) and the drive device (56, 60, 62, 64) of each acting unit (34) drive the rotary arm (20) and each acting member (39) in a phase-shifted manner such that, when the rotary arm (20) is oriented in parallel with the transport direction (18) of the object (16), each acting member (39) is located approximately in the middle of its displacement path (42) between its retracted position and its projected position.

9. The device of one of claims 1 to 8, **characterized in that** the rotary arm (20) is provided with two acting units (34) and that the drive shaft (30) of the rotary arm (20) is connected with the same in the middle between the two acting units (34).

## Revendications

1. Dispositif servant au transfert d'un objet déplacé par un dispositif de transport, dans une direction de transport, transversalement par rapport à la direction de transport, comprenant :
- un bras pivotant (20),
- un dispositif d'entraînement (24) qui comprend un arbre d'entraînement (30) pour entraîner le bras pivotant (20), et
- au moins un ensemble fonctionnel (34) disposé sur le bras pivotant (20), pour agir sur l'objet (16) à transférer transversalement par rapport à la direction de transport (18), où l'ensemble fonctionnel (34) comprend un élément fonctionnel (39) venant en appui sur l'objet (16), et un dispositif de montage (44), pour l'élément fonctionnel (39), pouvant tourner autour d'un axe pivotant (38) parallèle à l'arbre d'entraînement (30) du bras pivotant (20),
**caractérisé**
- **en ce que** l'élément fonctionnel (39) est monté de façon à pouvoir être déplacé vers l'avant et vers l'arrière sur le dispositif de montage (44) de l'ensemble fonctionnel (34), le long d'une trajectoire de déplacement linéaire (42), entre une position de sortie et une position de retour, et
- **en ce que** l'ensemble fonctionnel (34) comprend un dispositif d'entraînement (56, 60, 62, 64) qui fait tourner ou qui déplace vers l'avant et vers l'arrière le dispositif de montage (44) et l'élément fonctionnel (39) en synchronisme avec la rotation du bras pivotant (20), d'une façon telle que, lors de chaque rotation du bras pivotant (20), le dispositif de montage (44) effectue une rotation autour de son axe pivotant (38) et que l'élément fonctionnel (39) se déplace linéairement dans les deux sens de déplacement (42), respectivement une fois le long de la trajectoire de déplacement (42) entre sa position de retour et sa position de sortie.

2. Dispositif selon la revendication 1, **caractérisé en ce que** le dispositif d'entraînement de l'ensemble fonctionnel (34) comprend deux axes pivotants (38, 58) pouvant être entraînés en sens contraire et parallèles à l'arbre d'entraînement (30) du bras pivotant (20), axes pivotants dont le premier axe pivotant (58) est couplé au dispositif de montage (44), le second axe pivotant (38) étant accouplé à l'élément fonctionnel (39) via un mécanisme de transmission (56).

3. Dispositif selon la revendication 2, **caractérisé en ce que** le mécanisme de transmission (56) est un mécanisme de transmission à manivelle rotative.

4. Dispositif selon les revendications 2 et 3, **caractérisé en ce que** le premier axe pivotant (58) est accouplé, via un mécanisme de transmission (62), à l'arbre d'entraînement (30) du bras pivotant (20), et **en ce que** le second axe pivotant (38) est relié de façon fixe au bras pivotant (20).

5. Dispositif selon les revendications 3 et 4, **caractérisé en ce que** le mécanisme de transmission (56) à manivelle rotative comprend un premier levier (52) faisant saillie radialement par rapport au second axe pivotant (38), et comprend un second levier (54) qui est relié de façon articulée au premier levier (52) et à l'élément fonctionnel (39).

6. Dispositif selon la revendication 4 ou 5, **caractérisé en ce que** le premier axe pivotant (58) est un axe creux dans lequel le second axe pivotant (38) est disposé coaxialement.

7. Dispositif selon l'une quelconque des revendications 1 à 6, **caractérisé en ce que** l'élément fonctionnel (39) est supporté par au moins un profilé de glissement (40) qui est logé de façon coulissante le long du dispositif de montage (44).

8. Dispositif selon l'une quelconque des revendications 1 à 7, **caractérisé en ce que** le dispositif d'entraînement (24) du bras pivotant (20) et le dispositif d'entraînement (56, 60, 62, 64) de chaque ensemble fonctionnel (34) entraînent le bras pivotant (20) et chaque élément fonctionnel (39) en phase décalée, de façon telle que, lorsque le bras pivotant (20) est orienté parallèlement à la direction de transport (18) de l'objet (16), chaque élément fonctionnel (39) se trouve à peu près au milieu de sa trajectoire de déplacement (42) entre la position de retour et la position de sortie.

9. Dispositif selon l'une quelconque des revendications 1 à 8, **caractérisé en ce que** deux ensembles fonctionnels (34) sont disposés sur le bras pivotant (20), et **en ce que** l'arbre d'entraînement (30) du bras pivotant (20) est relié à ce bras pivotant, au milieu entre les deux ensembles fonctionnels (34).
